Europäisches Patentamt

European Patent Office

Office européen des brevets

(19)

(11) **EP 1 569 089 A2**

(12) **EUROPÄISCHE PATENTANMELDUNG**

(43) Veröffentlichungstag:
**31.08.2005 Patentblatt 2005/35**

(51) Int Cl.7: **G06F 7/58**

(21) Anmeldenummer: **05003237.4**

(22) Anmeldetag: **16.02.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **19.02.2004 DE 102004008178**

(71) Anmelder: **Giesecke & Devrient GmbH**
**81677 München (DE)**

(72) Erfinder:
• **Baldischweiler, Michael**
**81825 München (DE)**
• **Bockes, Markus, Dr.**
**81927 München (DE)**

• **Drexler, Hermann, Dr.**
**81371 München (DE)**
• **Kahl, Helmut, Dr.**
**80992 München (DE)**
• **Karch, Torsten**
**88085 Langenargen (DE)**
• **Lamla, Michael**
**80638 München (DE)**
• **Mamuzic, Nikola**
**81829 München (DE)**
• **Seysen, Martin, Dr.**
**80809 München (DE)**
• **Vater, Harald, Dr.**
**35398 Giessen (DE)**
• **Weicker, Sabine**
**80469 München (DE)**

(54) **Verfahren zum Erzeugen von Zufallszahlen in einem tragbaren Datenträger**

(57)    Die Erfindung betrifft ein Verfahren zum Erzeugen von Zufallszahlen $(y_1,..., y_m)$ in einem tragbaren Datenträger (1). Das erfindungsgemäße Verfahren zeichnet sich dadurch aus, dass die Zufallszahlen $(y_1,..., y_m)$ jeweils aus einem pseudozufälligen Anteil $(x_1,..., x_m)$ und einem zufälligen Anteil $(r_1,..., r_m)$ erzeugt werden. Der pseudozufällige Anteil wird mittels eines Pseudozufallszahlengenerators (9) ermittelt, der als ein im tragbaren Datenträger (1) implementierte Algorithmus ausgebildet ist. Der zufällige $(r_1,..., r_m)$ Anteil wird mittels eines Zufallszahlengenerators (5) ermittelt, der Bestandteil der Hardware des tragbaren Datenträgers (1) ist.

Fig. 2

EP 1 569 089 A2

Printed by Jouve, 75001 PARIS (FR)

## Beschreibung

Die Erfindung betrifft ein Verfahren zum Erzeugen von Zufallszahlen in einem tragbaren Datenträger. Weiterhin betrifft die Erfindung einen tragbaren Datenträger.

Bei vielen Einsatzgebieten von tragbaren Datenträgern, wie beispielsweise im Bereich des Zahlungsverkehrs oder bei Zugangskontrollen usw., ist es von vitaler Bedeutung für das jeweilige System, dass der Zustand des tragbaren Datenträgers nicht manipuliert werden kann und im tragbaren Datenträger vorhandene geheime Daten nicht ausgespäht werden können. Für den Schutz des tragbaren Datenträgers und der darin gespeicherten geheimen Daten spielen Zufallszahlen eine wichtige Rolle. Beispielsweise wird mit Hilfe von Zufallszahlen sichergestellt, dass sicherheitsrelevante Vorgänge, wie zum Beispiel die Durchführung einer Authentisierung, jeweils in nicht vorhersehbarer Weise anders ablaufen. Dadurch kann verhindert werden, dass aus der Aufzeichnung derartiger Vorgänge Rückschlüsse auf die dabei verwendeten geheimen Daten gezogen werden können oder gar eine Manipulation durch eine Wiedereinspielung der Aufzeichnungen möglich ist. Um die gewünschte Schutzwirkung mit den Zufallszahlen tatsächlich erzielen zu können, ist es äußerst wichtig, dass die Zufallszahlen von hoher Qualität sind. Dies bedeutet, dass die Zufallszahlen nicht vorhersehbar und nicht von außen beeinflussbar sein sollten. Außerdem müssen die Zufallszahlen innerhalb des tragbaren Datenträgers verfügbar sein, d. h. es sollte ein Zufallszahlengenerator zur Erzeugung von Zufallszahlen im tragbaren Datenträger vorhanden sein.

In diesem Zusammenhang ist es bereits bekannt, in einem tragbaren Datenträger einen Algorithmus zur Erzeugung von Pseudozufallszahlen zu implementieren. Derartige Pseudozufallszahlengeneratoren haben allerdings den Nachteil, dass sie eine determinierte Abfolge von Pseudozufallszahlen und keine tatsächlichen Zufallszahlen erzeugen. Weiterhin ist es auch bekannt, die Hardware eines tragbaren Datenträgers so auszubilden, dass sie in der Lage ist, Zufallszahlen zu erzeugen. Bei einem Hardware-Zufallszahlengenerator besteht aber das Risiko, dass die Erzeugung der Zufallszahlen durch äußere Einflüsse, wie beispielsweise Temperatur, Einwirkung intensiver Lichtstrahlung, Änderungen in der Betriebsspannung usw., beeinflussbar ist. Da nicht verhindert werden kann, dass ein tragbarer Datenträger in den physischen Einflussbereich eines Angreifers gelangt, ist es wichtig, die Erzeugung der Zufallszahlen so durchzuführen, dass weder eine gezielte Beeinflussung noch eine Vorhersehbarkeit der Zufallszahlen möglich ist.

Der Erfindung liegt die Aufgabe zugrunde, eine sichere und qualitativ hochwertige Erzeugung von Zufallszahlen in einem tragbaren Datenträger zu ermöglichen.

Diese Aufgabe wird durch ein Verfahren mit der Merkmalskombination des Anspruchs 1 gelöst.

Das erfindungsgemäße Verfahren zum Erzeugen von Zufallszahlen in einem tragbaren Datenträger zeichnet sich dadurch aus, dass die Zufallszahlen jeweils aus einem pseudozufälligen Anteil und einem zufälligen Anteil erzeugt werden. Dabei wird der pseudozufällige Anteil mittels eines Pseudozufallszahlengenerators ermittelt, der als ein im tragbaren Datenträger implementierte Algorithmus ausgebildet ist. Der zufällige Anteil wird mittels eines Zufallszahlengenerators ermittelt, der Bestandteil der Hardware des tragbaren Datenträgers ist.

Die Erfindung hat den Vorteil, dass sich damit Zufallszahlen hoher Qualität erzeugen lassen. Insbesondere lasen sich mit diesen Zufallszahlen die Anforderungen kryptographischer Anwendungen des tragbaren Datenträgers erfüllen.

Vorzugsweise wird jede Zufallszahl aus einem eigenen pseudozufälligen Anteil und einem eigenen zufälligen Anteil erzeugt. Dies trägt zur Erzeugung qualitativ hochwertiger Zufallszahlen bei. In einem bevorzugten Ausführungsbeispiel werden der pseudozufällige Anteil und der zufällige Anteil jeweils mittels einer XOR-Verknüpfung miteinander verknüpft. Dies hat den Vorteil, dass auch dann, wenn der Zufallszahlengenerator manipuliert wurde oder funktionsunfähig ist, noch Zufallszahlen von der Qualität des pseudozufälligen Anteils erzeugt werden. Der Pseudozufallszahlengenerator und/oder der Zufallszahlengenerator können vor Gebrauch auf einwandfreie Funktionsfähigkeit hin überprüft werden. Dadurch kann sichergestellt werden, dass der Pseudozufallszahlengenerator bzw. der Zufallszahlengenerator dem jeweiligen Anforderungsprofil entsprechen.

Im Rahmen des erfindungsgemäßen Verfahrens können Eingangswerte, die für die Ermittlung der pseudozufälligen Anteile vorgegeben werden, für eine zukünftige Erzeugung von Zufallszahlen aktualisiert und abgespeichert werden. Dabei ist es von Vorteil, wenn in die Aktualisierung wenigstens eines Eingangswerts ein zufälliger Anteil wenigstens partiell eingeht. Auf diese Weise lässt sich die Qualität der pseudozufälligen Anteile und damit auch die Qualität der Zufallszahlen verbessern. Um Manipulationen zu erschweren, sollten die aktualisierten Eingangswerte gespeichert werden, bevor die erzeugten Zufallszahlen für die weitere Verwendung zur Verfügung gestellt werden. Ein erster Satz von Eingangswerten kann ohne nennenswerten Zusatzaufwand während einer Initialisierung oder einer Personalisierung des tragbaren Datenträgers mit dem Zufallszahlengenerator erzeugt werden, da der Zufallszahlengenerator für das erfindungsgemäßen Verfahren ohnehin benötigt wird.

Um die Sicherheit des tragbaren Datenträgers zu erhöhen, können alle geheimen Daten nach deren Gebrauch in einem Arbeitsspeicher des tragbaren Datenträgers, welcher der temporären Zwischenspeicherung von Daten dient, gelöscht werden.

Der erfindungsgemäße tragbarer Datenträger weist einen Pseudozufallszahlengenerator auf, der in Form eines Algorithmus implementiert ist. Die Besonderheit des erfindungsgemäßen tragbaren Datenträgers besteht darin, dass ein in Form von Hardware ausgeführter Zufallszahlengenerator sowie eine Funktionalität zur Erzeugung von Zufallszahlen unter Einbeziehung des Pseudozufallszahlengenerators und des Zufallszahlengenerators vorgesehen sind.

Der tragbare Datenträger kann insbesondere einen Permanentspeicher aufweisen, dessen unbenutzte Bereiche mit Befehlen aufgefüllt sind, bei deren Ausführung keine Aktionen durchgeführt werden. Am Ende der unbenutzten Bereiche kann jeweils ein Sprungbefehl gespeichert sein. Dabei kann die Sprungadresse des Sprungbefehls innerhalb des jeweiligen unbenutzten Bereichs liegen. Ebenso ist es auch möglich, dass die Sprungadresse des Sprungbefehls auf eine Routine weist, die zu schützende Daten aus dem Speicher löscht. Nach dem Löschen kann die Routine in einer Endlosschleife verharren. Durch diese Maßnahmen können schädliche Auswirkungen von undefinierten Sprüngen im Permanentspeicher verhindert werden, die beispielsweise durch äußere Störungen ausgelöst werden können.

Die Erfindung wird nachstehend anhand der in der Zeichnung dargestellten Ausführungsbeispiele erläutert.

Es zeigen:

Fig.1    ein stark vereinfachtes Blockschaltbild für ein Ausführungsbeispiel eines erfindungsgemäßen tragbaren Datenträgers und

Fig. 2    eine schematische Darstellung eines Ausführungsbeispiels für die erfindungsgemäße Erzeugung von Zufallszahlen.

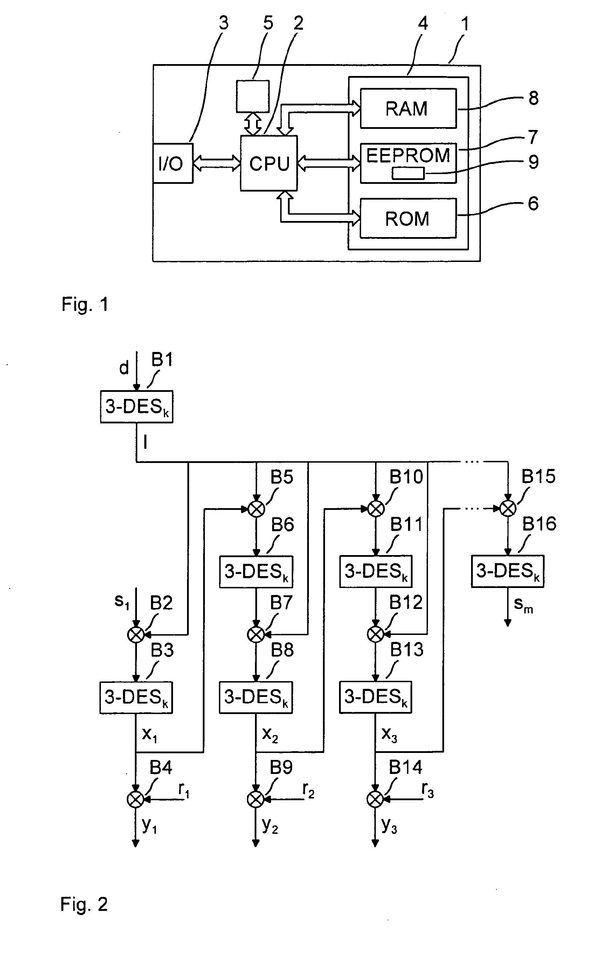

Fig.1 zeigt ein stark vereinfachtes Blockschaltbild für ein Ausführungsbeispiel eines tragbaren Datenträgers 1, der auf die erfindungsgemäße Weise Zufallszahlen erzeugt. Bei dem tragbaren Datenträger 1 kann es sich beispielsweise um eine Chipkarte handeln. Der tragbare Datenträger 1 weist eine Steuereinheit 2 auf, die die Funktionsabläufe des tragbaren Datenträgers 1 steuert. Weiterhin weist der tragbare Datenträger 1 eine Ein-/ Ausgabeeinheit 3, einen Speicher 4 und einen Zufallszahlengenerator 5 in Form einer entsprechenden Hardware auf. Beim dargestellten Ausführungsbeispiel besteht der Speicher 4 aus einem Permanentspeicher 6, einem nichtflüchtigen Speicher 7 und einem flüchtigen Speicher 8. Alternativ dazu ist auch ein anderer Aufbau des Speichers 4 möglich. Die Steuereinheit 2 ist mit der Ein-/ Ausgabeeinheit 3, dem Zufallszahlengenerator 5, dem Permanentspeicher 6, dem nichtflüchtigen Speicher 7 und dem flüchtigen Speicher 8 verbunden. Die Ein-/ Ausgabeeinheit 3 dient der Kommunikation mit externen Geräten, die durch eine berührende Kontaktierung des tragbaren Datenträgers 1 und/ oder kontaktlos abgewickelt werden kann.

Im Permanentspeicher 6 sind Daten abgelegt, die während der gesamten Lebensdauer des tragbaren Datenträgers 1 unverändert erhalten bleiben. Dabei wird der Begriff Daten im Folgenden sehr allgemein im Sinne beliebiger Informationen unabhängig von deren Inhalt verwendet und es werden darunter beispielsweise Programme, Parameter, personenbezogene Angaben, Schlüssel usw. subsumiert. Insbesondere ist im Permanentspeicher 6 das Betriebssystem des tragbaren Datenträgers 1 gespeichert. Dabei sind sämtliche unbenutzten Bereiche des Permanentspeichers 6 mit Kommandos aufgefüllt, die keine Aktionen zur Folge haben. Am Ende der unbenutzten Bereiche des Permanentspeichers 6 ist jeweils ein Sprungbefehl abgelegt, dessen Sprungadresse im jeweiligen unbenutzten Bereich des Permanentspeichers 6 liegt. Alternativ dazu kann die Sprungadresse des Sprungbefehls auf eine Routine weisen, die zu schützende Daten aus dem Speicher 4 löscht. Nach dem Löschen kann die Routine in einer Endlosschleife verharren. Durch diese Maßnahmen können Fehlfunktionen durch undefinierte Sprünge des Programmzählers, die von äußeren Störeinflüssen hervorgerufen werden können, vermieden werden. Undefinierte Sprünge des Programmzählers bergen beispielsweise das Risiko, dass eine Ausgabe des Inhalts des flüchtigen Speichers 8 zu einem Zeitpunkt veranlasst wird, zu dem dort geheime Daten abgelegt sind.

Der flüchtige Speicher 8 dient als Arbeitsspeicher für die Steuereinheit 2, so dass geheime Daten beispielsweise bei der Durchführung von Berechnungen und insbesondere auch bei der Ermittlung der Zufallszahlen im flüchtigen Speicher 8 zwischengespeichert werden. Im flüchtigen Speicher 8 bleibt der Speicherinhalt zwar nur solange erhalten, wie der tragbare Datenträger 1 mit einer Betriebspannung versorgt wird. Dennoch sollte die Verweildauer geheimer Daten im flüchtigen Speicher 8 möglichst kurz gehalten werden, indem diese Daten im flüchtigen Speicher 8 jeweils unmittelbar nach Gebrauch gelöscht werden. Dadurch kann das mit undefinierten Sprüngen verbundene Risiko der Ausspähung von geheimen Daten noch weiter reduziert werden.

Der nichtflüchtige Speicher 7 kann während der Lebensdauer des tragbaren Datenträgers 1 immer wieder neu beschrieben werden. Der jeweilige Speicherinhalt bleibt auch dann erhalten, wenn der tragbare Datenträger 1 nicht mit der Betriebsspannung versorgt wird. Im nichtflüchtigen Speicher 7 sind beispielsweise Ergänzungen zum Betriebssystem, Anwendungssoftware, Schlüssel, personenbezogene Daten usw. abgelegt. Insbesondere ist im nichtflüchtigen Speicher 7 die Software für einen Pseudozufallszahlengenerator 9 abgelegt. Alternativ dazu könnte diese Software auch im Permanentspeicher 6 gespeichert sein. Weiterhin sind im nichtflüchtigen Speicher 7 noch die Startwerte für den Pseudozufallszahlengenerator 9 abgelegt. Im Rahmen der Erfindung werden der Zufallszahlengenerator 5 und der Pseudozufallszahlengenerator 9 miteinander kombiniert betrieben, um eine besonders sichere Erzeugung hochwertiger Zufallszahlen zu ermöglichen. Näheres hierzu wird anhand von Fig. 2 erläutert.

Fig. 2 zeigt eine schematische Darstellung eines Ausführungsbeispiels für die erfindungsgemäße Erzeugung von Zufallszahlen. An dieser Erzeugung sind sowohl der in Hardware-Form realisierte Zufallszahlengenerator 5 als auch der in Software-Form realisierte Pseudozufallszahlengenerator 9 beteiligt. Für die erfindungsgemäße Erzeugung von Zufallszahlen wird eine Reihe von Eingangswerten für den Pseudozufallszahlengenerator 9 benötigt. Ein erster Satz von Eingangswerten wird im Rahmen der Initialisierung bzw. Personalisierung des tragbaren Datenträgers 1 im nichtflüchtigen Speicher 7 gespeichert. Die Eingangswerte können während der Initialisierung bzw. Personalisierung entweder außerhalb oder innerhalb des tragbaren Datenträgers 1 erzeugt werden. Eine Erzeugung außerhalb des tragbaren Datenträgers 1 kommt nur dann in Betracht, wenn die Initialisierung bzw. Personalisierung in einer sicheren Umgebung stattfindet. In diesem Fall werden die Eingangswerte mit einem externen Zufallszahlengenerator oder einem externen Pseudozufallszahlengenerator erzeugt und im tragbaren Datenträger 1 gespeichert. Dabei wird durch geeignete statistische Tests eine hohe Qualität der erzeugten Eingangswerte sichergestellt. Falls keine sichere Umgebung verfügbar ist, werden die Eingangswerte mit Hilfe des Zufallszahlengenerators 5 innerhalb des tragbaren Datenträgers 1 erzeugt. Auch bei dieser Variante findet eine Prüfung der erzeugten Eingangswerte durch statistische Tests statt. Bei der Erzeugung der Eingangswerte ist es jeweils sinnvoll, mehr Zufallsdaten als unmittelbar erforderlich mit dem Zufallszahlengenerator 5 zu erzeugen und diese dann durch eine geeignete Funktion, zum Beispiel durch eine Hash-Funktion, auf die für den jeweiligen Eingangswert erforderliche Länge zu komprimieren.

Bei den im nichtflüchtigen Speicher 7 vorgehaltenen Eingangswerten handelt es sich um einen acht Byte langen Startwert $s_1$, einen sechzehn Byte langen Triple-DES-Schlüssel k und einen acht Byte langen Zähler d. Dabei steht DES für Data Encryption Standard. Weiterhin wird noch eine Vorgabe für eine Zahl m benötigt, die angibt, wie viele Zufallszahlen ermittelt werden sollen, und insbesondere Werte zwischen 0 und 255 annehmen kann. Prinzipiell besteht auch noch die Möglichkeit, ein Flag vorzugeben, das entscheidet, ob der Zufallszahlengenerator 5 bei der Ermittlung der Zufallszahlen verwendet werden soll, oder ob ausschließlich der Pseudozufallszahlengenerator 9 eingesetzt wird. Im Folgenden wird der Zufallszahlengenerator 5 allerdings grundsätzlich einbezogen, so dass auf das Flag nicht näher eingegangen wird. Als Ergebnis liefert das erfindungsgemäße Verfahren m Zufallszahlen $y_1,...,y_m$.

Für die Durchführung des erfindungsgemäßen Verfahrens werden die Eingangswerte k, si und d jeweils vom nichtflüchtigen Speicher 7 in den flüchtigen Speicher 8 kopiert. Wie aus Fig. 2 hervorgeht, wird der Zähler d zu Beginn des erfindungsgemäßen Verfahrens mit dem Triple-DES-Algorithmus unter Verwendung des Schlüssels k verschlüsselt und dadurch ein Zwischenergebnis I ermittelt. Diese Operation ist als ein Block B1 dargestellt. Bei allen weiteren Verschlüsselungen, die zur Ermittlung der Zufallszahlen $y_1,..., y_m$ durchgeführt werden, kommt ebenfalls der Triple-DES-Algorithmus mit dem Schlüssel k zur Anwendung. Dabei geht das Zwischenergebnis I in die Ermittlung sämtlicher Zufallszahlen $y_1,..., y_m$ ein. So wird zur Ermittlung der ersten Zufallszahl $y_1$ das Zwischenergebnis I zunächst im Rahmen einer XOR-Verknüpfung, bei der Bit für Bit der logische Operator "exklusiv oder" angewendet wird, mit dem Startwert si verknüpft. Das Ergebnis der Verknüpfung, die in Fig. 2 mit dem Bezugszeichen B2 bezeichnet ist, wird in einem Block B3 verschlüsselt. Auf diese Weise wird eine erste Pseudozufallszahl $x_1$ erzeugt. Diese wird in einer XOR-Verknüpfung B4 mit einer ersten tatsächlichen Zufallszahl $r_1$ verknüpft, die vom Zufallszahlengenerator 5 erzeugt wurde. Das Ergebnis der Verknüpfung ist die erste Zufallszahl $y_1$.

Zur Erzeugung der zweiten Zufallszahl $y_2$ wird das Zwischenergebnis I in einer XOR-Verknüpfung B5 mit der ersten Pseudozufallszahl $x_1$ verknüpft und danach in einem Block B6 verschlüsselt. Es folgen eine XOR-Verknüpfung B7 mit dem Zwischenergebnis I und eine Verschlüsselung B8, wobei eine zweite Pseudozufallszahl $x_2$ erzeugt wird. Diese wird in einer XOR-Verknüpfung B9 mit einer zweiten tatsächlichen Zufallszahl $r_2$ des Zufallszahlengenerators 5 verknüpft und dadurch die zweite Zufallszahl $y_2$ erzeugt.

Bei der Erzeugung der dritten Zufallszahl $y_3$ werden nacheinander eine XOR-Verknüpfung B10 des Zwischenergebnisses I und der zweiten Pseudozufallszahl $x_2$, eine Verschlüsselung B11, eine XOR-Verknüpfung B12 mit dem Zwischenergebnis I, eine Verschlüsselung B13 und eine XOR-Verknüpfung B14 einer so erzeugten dritten Pseudozufallszahl $x_3$ mit einer dritten tatsächlichen Zufallszahl r3 des Zufallszahlengenerators 5 durchgeführt.

Gemäß diesem Schema können noch weitere Zufallszahlen erzeugt werden. Zudem wird für eine spätere Verwendung ein neuer Startwert $s_m$ erzeugt. Hierzu werden eine XOR-Verknüpfung B15 der dritten Pseudozufallszahl $x_3$ bzw. der letzten ermittelten Pseudozufallszahl und des Zwischenergebnisses I und eine anschließende Verschlüsselung B16 durchgeführt. Außerdem wird ein neuer Wert für den Zähler d ermittelt. Dies ist in Fig. 2 nicht dargestellt. Zur Ermittlung des neuen Werts für den Zähler d wird der derzeitige Wert aus dem nichtflüchtigen Speicher 7 in den flüchtigen Speicher 8 kopiert. Anschließend wird mit Hilfe eines Bytes r, das vom Zufallszahlengenerator 5 erzeugt wurde, folgende Berechnung durchgeführt:

$$d := d + r + 1 \bmod 2^{64}$$

Der auf diese Weise neu ermittelte Zähler d wird ebenso wie der neu ermittelte Startwert $s_m$ sicher in den nichtflüchtigen Speicher 7 eingeschrieben. Erst danach werden die Zufallszahlen $y_1,..., y_m$ für die weitere Verwendung ausgegeben. Dadurch soll verhindert werden, dass ein Angreifer von den Zufallszahlen $y_1,...,$ $y_m$ Kenntnis erlangen und eine Speicherung des neu ermittelten Zählers d und des neu ermittelten Startwerts $s_m$ verhindern kann. Ohne Aktualisierung dieser Eingangswerte wäre die Erzeugung der Pseudozufallszahlen $x_1,...,x_m$ vorhersehbar, so dass ein erhöhtes Angriffsrisiko bestehen würde. Da die Pseudozufallszahlen $x_1,..., x_m$ mittels einer XOR-Verknüpfung mit den tatsächlichen Zufallszahlen $r_1,...,r_m$ des Zufallszahlengenerators 5 verknüpft werden, liefert das erfindungsgemäße Verfahren allerdings auch dann brauchbare Zufallszahlen $y_1,..., y_m$, wenn der Zufallszahlengenerator 5 manipuliert wird oder funktionsunfähig ist.

Das in Fig. 2 dargestellte Ausführungsbeispiel für die erfindungsgemäße Erzeugung von Zufallszahlen kann beispielsweise so weitergebildet werden, dass nach den XOR-Verknüpfungen B4, B9 und B14 jeweils eine Verschlüsselung mit dem Triple-DES-Algorithmus durchgeführt wird, um die Zufallszahlen $y_1$, $y_2$ und $y_3$ zu erzeugen. Außerdem kann das Ausführungsbeispiel auch so abgewandelt werden, dass andere Verschlüsselungsalgorithmen zum Einsatz kommen, beispielsweise der AES-Algorithmus. Dabei steht AES für Advanced Encryption Standard.

Als eine weitere Maßnahme zur Erhöhung der Sicherheit des tragbaren Datenträgers 1 sind zur Abwehr von Timing Attacken alle Berechnungen, bei denen geheime Daten verwendet werden, so zu programmieren, dass die Berechnungszeit keine Informationen über die geheimen Daten liefert. Außerdem sind für die Berechnung z. B. von Prüfsummen keine Bit-orientierten Verfahren, sondern Verfahren auf Basis eines oder mehrerer Bytes, wie beispielsweise Reed-Solomon Codes oder Hamming Codes usw. zu verwenden.

## Patentansprüche

1.  Verfahren zum Erzeugen von Zufallszahlen ($y_1,...,$ $y_m$) in einem tragbaren Datenträger (1), **dadurch gekennzeichnet, dass** die Zufallszahlen ($y_1,..., y_m$) jeweils aus einem pseudozufälligen Anteil ($x_1,...,$ $x_m$) und einem zufälligen Anteil ($r_1,..., r_m$) erzeugt werden, wobei der pseudozufällige Anteil ($x_1,..., x_m$) mittels eines Pseudozufallszahlengenerators (9) ermittelt wird, der als ein im tragbaren Datenträger (1) implementierte Algorithmus ausgebildet ist, und wobei der zufällige Anteil ($r_1,..., r_m$) mittels eines Zufallszahlengenerators (5) ermittelt wird, der Bestandteil der Hardware des tragbaren Datenträgers (1) ist.

2.  Verfahren nach Anspruch 1, **dadurch gekennzeichnet, dass** jede Zufallszahl ($y_1,..., y_m$) aus einem eigenen pseudozufälligen Anteil ($x_1,..., x_m$) und einem eigenen zufälligen Anteil ($r_1,..., r_m$) erzeugt wird.

3.  Verfahren nach einem der vorhergehenden Ansprüche, **dadurch gekennzeichnet, dass** der pseudozufällige Anteil ($x_1,..., x_m$) und der zufällige Anteil ($r_1..., r_m$) jeweils mittels einer XOR-Verknüpfung miteinander verknüpft werden.

4.  Verfahren nach einem der vorhergehenden Ansprüche, **dadurch gekennzeichnet, dass** der Pseudozufallszahlengenerator (9) und/ oder der Zufallszahlengenerator (5) vor Gebrauch auf einwandfreie Funktionsfähigkeit hin überprüft werden.

5.  Verfahren nach einem der vorhergehenden Ansprüche, **dadurch gekennzeichnet, dass** für die Ermittlung der pseudozufälligen Anteile ($x_1,..., x_m$) vorgegebene Eingangswerte (si, d) für eine zukünftige Erzeugung von Zufallszahlen ($y_1,..., y_m$) aktualisiert und abgespeichert werden.

6.  Verfahren nach Anspruch 5, **dadurch gekennzeichnet, dass** in die Aktualisierung wenigstens eines Eingangswerts (d) ein zufälliger Anteil (r) wenigstens partiell eingeht.

7.  Verfahren nach einem der Ansprüche 5 oder 6, **dadurch gekennzeichnet, dass** die aktualisierten Eingangswerte ($s_m$, d) gespeichert werden, bevor die erzeugten Zufallszahlen ($y_1,..., y_m$) für die weitere Verwendung zur Verfügung gestellt werden.

8.  Verfahren nach einem der Ansprüche 5 bis 7, **dadurch gekennzeichnet, dass** ein erster Satz von Eingangswerten (si, d) während einer Initialisierung oder einer Personalisierung des tragbaren Datenträgers (1) mit dem Zufallszahlengenerator (5) erzeugt wird.

9.  Verfahren nach einem der vorhergehenden Ansprüche, **dadurch gekennzeichnet, dass** der tragbare Datenträger (1) einen Arbeitsspeicher (8) zur temporären Zwischenspeicherung von Daten aufweist und alle geheimen Daten nach deren Gebrauch im Arbeitsspeicher (8) gelöscht werden.

10. Tragbarer Datenträger mit einem Pseudozufallszahlengenerator (9), der in Form eines Algorithmus implementiert ist, **dadurch gekennzeichnet, dass** ein in Form von Hardware ausgeführter Zufallszahlengenerator (5) sowie eine Funktionalität zur Erzeugung von Zufallszahlen ($y_1$,..., $y_m$) unter Einbeziehung des Pseudozufallszahlengenerators (9) und des Zufallszahlengenerators (5) vorgesehen sind.

11. Tragbarer Datenträger nach Anspruch 10, **dadurch gekennzeichnet, dass** ein Permanentspeicher (5) vorgesehen ist und alle unbenutzten Bereiche des Permanentspeichers (5) mit Befehlen aufgefüllt sind, bei deren Ausführung keine Aktionen durchgeführt werden, und am Ende der unbenutzten Bereiche jeweils ein Sprungbefehl gespeichert ist.

12. Tragbarer Datenträger nach Anspruch 11, **dadurch gekennzeichnet, dass** die Sprungadresse des Sprungbefehls innerhalb des jeweiligen unbenutzten Bereichs liegt.

13. Tragbarer Datenträger nach Anspruch 11, **dadurch gekennzeichnet, dass** die Sprungadresse des Sprungbefehls auf eine Routine weist, die zu schützende Daten aus dem Speicher (4) löscht.

14. Tragbarer Datenträger nach Anspruch 13, **dadurch gekennzeichnet, dass** die Routine nach dem Löschen in einer Endlosschleife verharrt.

Fig. 1

Fig. 2